# EUROPEAN PATENT APPLICATION

(11) **EP 4 098 439 A1**
(43) Date of publication of application: **07.12.2022**
(21) Application number: 21747722.3
(22) Date of filing: 28.01.2021
(51) Int. Cl.: B32B 17/06, C03C 27/12, G01N 3/20, B60J 1/00

(54) **LAMINATED GLASS FOR VEHICLES, AUTOMOBILE, AND PRODUCTION METHOD FOR LAMINATED GLASS FOR VEHICLES**

(30) Priority: 31.01.2020 JP 2020015447
(71) Applicant: AGC INC., Chiyoda-ku, Tokyo 1008405 (JP)
(72) Inventor: NAGAI, Kuniko, Tokyo 100-8405 (JP); NISHIHAMA, Jiro, Tokyo 100-8405 (JP)
(74) Representative: Müller-Boré & Partner Patentanwälte PartG mbB
(86) International application number: PCT/JP2021/002981
(87) International publication number: WO 2021/153654

(57) **Abstract**

Laminated glass for vehicle includes a region with a breaking stress measured by a method described in ISO 1288-5 (2016) of 100 MPa or more and 600 MPa or less. A percentage of the region is greater than or equal to 90% of a see-through region.

## Description

### TECHNICAL FIELD

The present invention relates to laminated glass for vehicle, an automobile, and a method for producing laminated glass for vehicle.

### BACKGROUND ART

Vehicles such as automobiles are required to be highly safe. For example, windshields are required to satisfy the standards, as a safety glass for vehicle, to prevent an occupant from being thrown out to an exterior side when the occupant collides with the windshield from the interior and to absorb impacts, from the viewpoint of protecting the occupant. In recent years, the safety performance when the vehicle collides with a pedestrian has been emphasized. In particular, the performance for securing the safety of a human body when the vehicle collides with the human body, i.e., the human body protection performance during a collision, has been strongly required. Various configurations are being studied. For example, Patent document 1 proposes a configuration in which the safety of a pedestrian can be secured by separating the cowl louver and the windshield which were connected to each other, when an impact is applied from forward to downward, with respect to surroundings of the cowl louver and the windshield glass due to a front collision of the vehicle with the pedestrian.

### CITATION LIST

### PATENT LITERATURE

Patent Document 1: Japanese Unexamined Patent Application Publication No. 2017-213928

### SUMMARY OF THE INVENTION

### PROBLEM TO BE SOLVED BY THE INVENTION

The demand of a high level for safety as described above is increasing also for glass for vehicle. While a certain degree of robustness is required for the glass for vehicle as a whole, considering the protection of a human body during a collision as described above, the strength of the glass for vehicle needs to be controlled so as not to impact to or damage the human body even when the glass for vehicle collides with the human body.

However, it is known that the glass formed in a plate shape has been known to originally have a distribution of strength in the plane, and the strength of the glass plate is also usually defined probabilistically by the safety factor, the probability of failure, and the like. Accordingly, even if the overall strength of the glass for vehicle is appropriate, a region with excessively high strength may be localized in the plane of the glass for vehicle, and if the human body collides with the region with excessively high strength, the human body may be damaged.

Here, it is also contemplated that the overall strength of the glass for vehicle may be reduced by changing the composition or the manufacturing process of the glass in order to reduce the strength in the region with the excessively high strength localized in the plane. However, in such a case, a decrease in strength may also occur in a region with a relatively low strength, resulting in a loss of the necessary robustness as glass for vehicle. Accordingly, from the viewpoint of protecting a human body as described above, glass for vehicle having high safety performance during a collision is required, while ensuring the robustness as glass for vehicle by reducing or eliminating the region with excessively large strength and suppressing the distribution of strength in the plane.

One aspect of the present invention has a subject to provide glass for vehicle that is robust and has high safety performance during a collision.

### MEANS FOR SOLVING PROBLEMS

According to an aspect of the present invention, a laminated glass for vehicle includes a region with a breaking stress measured by a method described in ISO 1288-5 (2016) of 100 MPa or more and 600 MPa or less, a percentage of the region being greater than or equal to 90% of a see-through region.

### EFFECTS OF THE INVENTION

According to an aspect of the present invention, glass for vehicle which is robust and has a high safety performance during a collision can be provided.

### BRIEF DESCRIPTION OF DRAWINGS

[Figure 1] FIG. 1 is a front view of a vehicle provided with laminated glass according to an embodiment of the present invention.
[Figure 2] FIG. 2 is a cross-sectional view of the laminated glass shown in FIG. 1.
[Figure 3] FIG. 3 is a graph showing results of Example 1 and Example 2.
[Figure 4] FIG. 4 is a diagram showing locations of samples cut from a windshield in Example 3 and Example 4.
[Figure 5] FIG. 5 is a graph showing results of Example 3 and Example 4.

### MODE FOR CARRYING OUT THE INVENTION

### <Glass for vehicle>

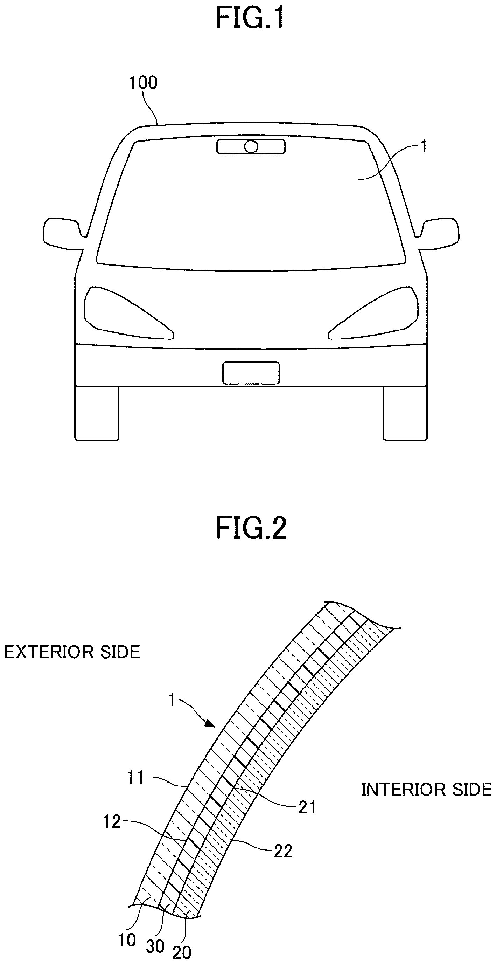

A form of the present invention is glass for vehicle, specifically laminated glass for vehicle. FIG. 1 shows an example in which laminated glass for vehicle 1 according to the present embodiment is used as a windowpane of an automobile 100. In the example of FIG. 1, the laminated glass for vehicle 1 is a windshield of the automobile 100, but the laminated glass for vehicle 1 can also be used as a windowpane other than the windshield, such as a side glass, rear glass, or roof glass.

FIG. 2 shows a cross-sectional view of the laminated glass for vehicle 1 shown in FIG. 1. As shown in FIG. 2, the laminated glass for vehicle 1 is obtained by bonding a first glass plate 10 to a second glass plate 20 through an interlayer 30. In the example of FIG. 2, the first glass plate 10 is disposed on an exterior side of the vehicle and the second glass plate 20 is disposed on an interior side of the vehicle. As shown in FIG. 2, the first glass plate 10 on the exterior side includes a first surface 11, which is a surface on the exterior side, and a second surface 12, which is a surface on the interior side. The second glass plate 20 on the interior side includes a third surface 21, which is a surface on the exterior side, and a fourth surface 22, which is a surface on the interior side.

The first glass plate 10 and the second glass plate 20 (hereinafter referred to as glass plates collectively) are preferably made of inorganic glass. Suitable inorganic glass may include soda lime silicate glass, aluminosilicate glass, borate glass, lithium aluminosilicate glass, borosilicate glass, and the like. The process of forming the glass plates made of inorganic glass is not particularly limited, but for example, the glass plates are preferably glass plates formed by a float process or the like.

The glass plate may be non-tempered glass. The non-tempered glass is obtained by forming molten glass into a plate shape and annealing slowly, and is not subjected to a tempering treatment such as an air-cooled tempering treatment or a chemically tempering treatment.

Thicknesses of the first glass plate 10 and the second glass plate 20 may be the same or may be different from each other. The thickness of the first glass plate 10 may be 1.1 mm or more and 3.5 mm or less. When the thicknesses of the first glass plate 10 and the second glass plate 20 are different from each other, the thickness of the second glass plate 20 may be 0.5 mm or more and 2.3 mm or less. In addition, configurations of the first glass 10 and the second glass plate 20 (a material constituting the glass plate, a method for producing the glass plate, or the like) may be the same or may be different from each other. In addition, the overall thickness of the laminated glass for vehicle 1 may be 2.3 mm or more and 8.0 mm or less.

A material of the interlayer 30 disposed between the first glass plate 10 and the second glass plate 20 and bonding the first glass plate 10 and the second glass plate 20 is not particularly limited, but is preferably a thermoplastic resin. Suitable material of the interlayer 30 may include a thermoplastic resin conventionally used for an equivalent application such as a plasticized polyvinyl acetal-based resin, a plasticized polyvinyl chloride-based resin, a saturated polyester-based resin, a plasticized saturated polyester-based resin, a polyurethane-based resin, a plasticized polyurethane-based resin, an ethylene-vinyl acetate copolymer-based resin, an ethylene-ethyl acrylate copolymer-based resin, a cycloolefin polymer resin, an ionomer resin, and the like. A resin composition containing modified block copolymer hydride as described in Japanese Patent No. 6065221 can also be suitably employed. Among the above-described resins, the plasticized polyvinyl acetal-based resin is preferably used because of its excellence in balance of performances, such as transparency, weather resistance, strength, bond strength, resistance to penetration, absorbability for impact energy, humidity resistance, thermal insulating property, and sound insulating property. The thermoplastic resin may be used singly, or two or more types of thermoplastic resins may be used in combination. The term "plasticized" in the plasticized polyvinyl acetal-based resin means that the resin is plasticized by adding a plasticizing agent. The same applies to the other plasticized resins.

The interlayer 30 may be a resin that does not contain a plasticizing agent. The interlayer 30 may be a resin that does not contain a plasticizing agent, for example, the ethylene-vinyl acetate copolymer-based resin. The above-described polyvinyl acetal-based resin may include, for example, polyvinyl formal resin that is obtained by reacting polyvinyl alcohol (PVA) and formaldehyde, narrowly defined polyvinyl acetal-based resin that is obtained by reacting PVA and an acetaldehyde, polyvinyl butyral resin (PVB) that is obtained by reacting PVA and n-butyl aldehyde, and the like. Especially, PVB is preferable, because of its excellence in balance of performances, such as transparency, weather resistance, strength, bond strength, resistance to penetration, absorbability for impact energy, humidity resistance, thermal insulating property, and sound insulating property. The polyvinyl acetal resin may be used singly, or two or more types of polyvinyl acetal-based resins may be used in combination.

The periphery of the laminated glass for vehicle 1 may be provided with a shielding layer for protecting a sealant or the like that bonds the glass for vehicle 1 to a vehicle body and holds the glass for vehicle 1 when the laminated glass for vehicle 1 is mounted to an opening of the vehicle. The shielding layer can be formed, for example, by applying a ceramic color paste containing a meltable glass frit containing a black pigment, and then firing it. The shielding layer may be provided on one or more of the second surface 12, the third surface 21, and the fourth surface 22 of the laminated glass for vehicle 1.

The laminated glass for vehicle 1 may be curved as a whole or partially. In this case, each of the glass plates (the first glass plate 10 and the second glass plate 20) may be processed to a predetermined curvature and curved. The radius of curvature of the glass plate may be from 1,000 mm to 100,000 mm. When the laminated glass for vehicle 1 convex is curved, the laminated glass may be curved convex toward the side of the first surface 11 of the first glass plate 10 and the third surface 21 of the second glass plate 20, i.e., the vehicle-exterior side of the vehicle. In the case where the glass plate is an inorganic glass and has a curved shape, the glass plate may be obtained by a bending forming by gravity molding, press molding, or the like after forming by the float process. The bending forming is performed by softening glass by heating. The temperature of the glass during the bending forming is about 550°C to 700°C inclusive. The laminated glass for vehicle 1 may have a single curved shape which is bent only in one direction, for example, in the front-to-rear direction or the vertical direction of the automobile 100 when the laminated glass for vehicle 1 is mounted to the opening of the automobile 100. In addition, the laminated glass for vehicle 1 may have a plural curved shape which is bent in the front-to-rear direction and the vertical direction. The radius of curvature of the first glass plate 10 and the radius of curvature of the second glass plate 20 in the laminated glass for vehicle 1 may be the same or may be different from each other.

The laminated glass for vehicle is required to have a variety of safety-related characteristics and functions, and this requirement is increasing. Especially, when the laminated glass for vehicle is used as a windowpane for a vehicle, safety performance for the human body upon an occurrence of an impact, from the viewpoint of protecting occupants, pedestrians, etc. is required on the assumption that the laminated glass for vehicle has appropriate robustness as a windowpane. Particularly, in recent years, the viewpoint of protecting pedestrians has been emphasized, and the glass for vehicle has also been required to meet specific criteria such as the Head Injury Criterion (HIC).

On the other hand, in the laminated glass for vehicle according to the present embodiment, a percentage of a region with a breaking stress measured by a method using R30 described in ISO 1288-5 (2016) of 100 MPa or more and 600 MPa or less is greater than or equal to 90% of a see-through region. The percentage may be preferably 95% or more, and more preferably 98% or more.

In the present specification, the see-through region refers to a portion of the laminated glass for vehicle excluding the shielding layer formed on the laminated glass for vehicle.

In the present invention, the breaking stress or a bending strength can be measured in each of a plurality of regions included in the laminated glass for vehicle. In this case, the measurement may be performed while leaving the laminated glass for the vehicle as it is, or the laminated glass for the vehicle may be divided into pieces by cutting, and the breaking stress may be measured for each divided piece. In this case, the size of the divided glass piece may be 100 mm × 100 mm, but the size is not limited thereto. The size of the divided glass piece may be (60 mm to 300 mm) × (60 mm to 300 mm). In addition, when the laminated glass for vehicle is divided into pieces, the measurement may be performed using the divided piece of laminated glass as it is, or the interlayer may be removed from the divided glass piece and the measurement may be performed for each glass plate. Alternatively, it is possible to perform the measurement for the individual glass plates prior to preparing the laminated glass. Therefore, in the first glass plate 10 and/or the second glass plate 20 included in the laminated glass, a percentage of a region with a breaking stress measured by the method using R30 described in ISO 1288-5 (2016) of 100 MPa or more and 600 MPa or less is greater than or equal to 90% of the see-through region. In addition, the measurement of the breaking stress is preferably performed in the state before mounting the laminated glass for vehicle to the vehicle.

In the method described in ISO 1288-5 (2016), a plate glass to be tested is mounted on a support ring having a predetermined diameter, and a gradually increasing load is applied from the upper side by a load ring having a predetermined diameter smaller than the support ring, and the load at breakage is measured, and the breaking stress value is determined according to the predetermined formula described in ISO 1288-5 (2016). Here, when the laminated glass for vehicle, such as a windshield, is curved, the breaking stress of a divided piece of a curved region is measured. In the measurement and estimation of this case, the breaking stress value can be obtained by deriving an approximate expression according to the stress measurement and substituting a measured value into the approximate expression without using the formula described in the above-described ISO.

In the configuration according to the present embodiment, in which the region with the predetermined breaking stress value is greater than or equal to a predetermined percentage of the see-through region, the percentage of the region having a strength within an appropriate range that can maintain the robustness as the glass for vehicle and secure the safety performance for a human body upon an occurrence of an impact is increased. That is, the in-plane strength is homogenized or leveled so that the strengths measured in the plurality of regions of the glass for vehicle fall within a more appropriate range. In other words, a strength distribution or a strength variation in the plane is suppressed. Thus, according to the present embodiment, glass for vehicle, as a whole, which is robust as the glass for vehicle and in which the safety performance for a human body or other organisms upon an occurrence of an impact is improved, can be provided.

The breaking stress is measured by applying a load from one side of the laminated glass for vehicle, but the load applied side may be the interior side surface or the exterior side surface. That is, in the laminated glass for vehicle according to the present embodiment, when a load is applied from the interior side surface, a percentage of a region with a breaking stress of 100 MPa or more and 600 MPa or less measured by a method described in ISO 1288-5 (2016) may be 90% or more of a see-through region, and/or when the load is applied from the exterior side surface, a percentage of the region with the breaking stress of 100 MPa or more and 600 MPa or less measured by the method described in ISO 1288-5 (2016) may be 90% or more of the see-through region. If the aforementioned ratio is satisfied in the measurement when the load is applied from the interior side surface, the safety performance when the vehicle is subjected to an impact from the interior side can be improved, which is preferable from the viewpoint of protecting an occupant. If the aforementioned ratio is satisfied in the measurement when the load is applied from the exterior side surface, both the safety performance when the vehicle is subjected to an impact from the exterior side and the above-described safety performance can be improved, which is preferable from the viewpoint of protecting a pedestrian.

Furthermore, in the laminated glass for vehicle according to the embodiment, a percentage of a region with the breaking stress of greater than 600 MPa measured by the method described in ISO 1288-5 (2016) is preferably 5% or less of the see-through region. The percentage is preferably 3% or less, and more preferably 1% or less. With the above-described configuration, the region of excessively high strength can be reduced or eliminated in the laminated glass. Therefore, even when an occupant or a pedestrian collides with the laminated glass for vehicle upon the occurrence of the impact, it is possible to reduce the possibility that the occupant or the pedestrian may be damaged by being hit on the head or the like by the region where the strength is excessively high, thereby improving the safety performance against the human body.

In the above-described embodiment, the load applied side may be the exterior side or the interior side when the breaking stress is measured. That is, when the load is applied from the exterior side, the percentage of the region with the breaking stress measured by the method described in ISO 1288-5 (2016) of greater than 600 MPa may be 5% or less of the see-through region, and/or the percentage of the region with the breaking stress measured by the method described in ISO 1288-5 (2016) of greater than 600 MPa when the load is applied from the interior side may be 5% or less of the see-through region. Here, particularly, it is preferable from the viewpoint of protecting a pedestrian that the breaking stress is measured by applying the load from the exterior side.

Furthermore, in the laminated glass for vehicle according to the embodiment, a percentage of a region with the breaking stress measured by the method described in ISO 1288-5 (2016) of less than 100 MPa is preferably 5% or less of the see-through region. The percentage is preferably 3% or less, and more preferably 1% or less. According to the above-described configuration, the robustness of the laminated glass for vehicle can be surely maintained.

In the above-described embodiment, the load applied side may be the exterior side or the interior side when the breaking stress is measured. That is, when the load is applied from the interior side, the percentage of the region with the breaking stress of less than 100 MPa measured by the method described in ISO 1288-5 (2016) may be 5% or less of the see-through region, and/or the percentage of the region with the breaking stress of less than 100 MPa measured by the method described in ISO 1288-5 (2016) when the load is applied from the exterior side may be 5% or less of the see-through region.

It is preferable that when the load is applied from the interior side or from the exterior side, the percentage of the region with the breaking stress measured by the method described in ISO 1288-5 (2016) of greater than 600 MPa is 5% or less of the see-through region, and the percentage of the region with the breaking stress measured by the above-described method of less than 100 MPa is 5% or less of the see-through region. Accordingly, it is possible to reduce or eliminate the region of excessively high strength, and thus the distribution of strength can be suppressed. Accordingly, it is possible to further exert the effect of reducing or eliminating damage to a human body when the human body collides with the laminated glass, while maintaining the robustness as the laminated glass for vehicle. When the above-described breaking stress is measured by applying a load from the exterior side, it is particularly preferable from the viewpoint of protecting a pedestrian.

### <Method for producing glass for vehicle>

The above-described glass for vehicle can be produced by a method according to an aspect of the present invention described below. That is, the method for producing the laminated glass for vehicle according to the aspect of the present invention is a method for producing a laminated glass for vehicle, in which a first glass plate disposed on an exterior side and a second glass plate disposed on an interior side are laminated through an interlayer, the first glass plate having a first surface on the exterior side and a second surface on the interior side, the second glass plate having a third surface on the exterior side and the fourth surface on the interior side, the method including applying a strength leveling processing to at least one of the first to fourth surfaces. The strength leveling processing may be performed for the glass plates individually prior to forming the laminated glass for vehicle, or may be performed after forming the laminated glass for vehicle.

The strength leveling processing is a process for suppressing a distribution or a variation of a strength in the plane of the laminated glass for vehicle. In other words, it is a procedure of adjusting such that a distribution of strength values (breaking stress or bending strength) measured in a plurality of regions in the laminated glass for vehicle, respectively, is narrowed. The strength leveling processing can be applied to at least one of the first surface 11, the second surface 12, the third surface 21, and the fourth surface 22 (FIG. 2) of the laminated glass for vehicle 1. Particularly, the strength leveling processing is preferably applied to one or more of the second surface 12, the third surface 21, and the fourth surface 22 of the laminated glass for vehicle.

The strength leveling processing (also referred to as a strength homogenization process or a strength control process) can be performed by bringing a substance into contact with a surface of the laminated glass for vehicle or on a surface of a glass plate for configuring the laminated glass for vehicle.

In one example of the strength leveling processing, a tool can be brought into contact with the surface of the glass plate. A shape of the tool is not particularly limited and may be in a shape of a film or sheet, a shape of a roll, a shape of a brush or a painting brush, or the like, and may have flexibility or elasticity or may not have flexibility or elasticity. The shape may also be a shape of disk or a shape of blade. The material of the tool may be ceramic, metal, resin, or the like. It may also be molded from a foam, for example, a foam resin molded body, a foam resin sheet, or molded from fibers, for example, a fibrous structure in which fibers are assembled three-dimensionally or planar, and may be particularly fabric, non-woven fabric, paper, or the like. When the tool is made of a resin or the material of the tool contains a resin, suitable resins specifically include, for example, ultra-low density polyethylene, straight chain low density polyethylene, low density polyethylene, high density polyethylene, polypropylene, polystyrene, polyurethane, silicone resin, EVA, and olefinic elastomer. The above-described material may be used singly, or two or more types of the materials may be used in combination for configuring the tool.

At least a part of the surface of the above-described tool, which is brought into contact with the glass plate, is preferably formed with fine irregularities. These irregularities of a fine difference on the surface of such a tool can be formed by performing a roughening treatment for at least the part of the surface of the tool which is brought into contact with the glass plate, by adhering fine powders to the part of the surface and fixing them, or by kneading powders during molding the material such as a resin.

When the tool is brought into contact with the glass plate, the tool may be moved relative to the glass plate in a state where the tool is brought into contact with the glass plate. In addition, when a tool is brought into contact with a glass plate, the process can be performed by applying a predetermined pressing force, or without applying or practically without applying the pressing force.

As a tool configuration, for example, a soft roll made of a foaming agent covered with a cover having fine irregularities may be passed through a resilient core, to be brought into contact with the glass. Alternatively, the sheet-like substance having irregularities on the surface may be brought into contact with the surface of the glass plate. Thus, the strength leveling processing can be efficiently performed on the production line.

In addition, in the strength leveling processing, the tool may be brought into contact with the glass plate in the presence of a liquid. The liquid is not particularly limited as long as the glass and the tool are not denatured, and includes water, an aqueous solution, or an organic solvent. The liquid may be volatile or non-volatile.

Alternatively, in another example of the strength leveling processing, a powder may be brought into contact with the surface of the laminated glass or of the glass plate. Thus, for example, the powder may be sprayed onto the surface of the glass plate, then the surface of the glass plate may be wiped with the above-described tool or washed after sweeping to remove the powder. When wiping or sweeping the surface of the glass plate with the tool described above, the surface may be wiped or swept directly over the powder, or a liquid such as water may be added and the surface may be wiped or swept. The powder may also be brought into contact with the surface, and the tool placed thereon may be moved relative to the glass plate along the surface of the glass plate applying a pressing force or without applying the pressing force. The tool used in the strength leveling processing using powder can be the same as the tool used in the above example of the strength leveling processing by bringing the tool into contact with the surface of the glass plate.

The powder used in the strength leveling processing using the powder may contain an inorganic material, an organic material, or both. The powder is preferably an inorganic powder. Suitable inorganic powders may include, for example, cerium oxide, glass beads, titanium oxide, diamond, calcium carbonate, silicic anhydride, sodium hydrogen phosphate, silicon nitride, silicon carbide, and aluminum oxide. The above-described powder may be used singly, or two or more types of the powders may be used in combination. The powder used may have an average particle diameter of 10 nm to 100 µm inclusive, measured by a sedimentation method. The powder may also be used in a dry state, in a wetted state with added liquid, or in a slurry form. The liquid used with the powder is not particularly limited as long as the liquid does not denature the glass and the powder, and includes water, an aqueous solution, or an organic solvent. The liquid may be volatile or non-volatile.

Details of the mechanism by which the strength leveling processing levels the strength of the glass for vehicle is not necessarily clear, but fine cracks (also referred to as microcracks, i.e., fine cracks of the order of nanometers or less that are invisible) on the surface of the glass plate are considered to be involved. That is, on the surface of the glass plate after production, fine cracks are originally present, and the uneven distribution of the fine cracks is a factor in the variation in the strength of the glass for vehicle. However, it is considered that new cracks can be introduced to the surface of the glass plate by the strength leveling processing, and it is possible to reduce the strength in the region where the strength is excessively high according to the introduced cracks. However, since the strength leveling processing does not further reduce or almost does not reduce the strength in the region of originally relatively low strength, the in-plane strength can be leveled as a result.

When the laminated glass for vehicle is subjected to an impact, it is possible to absorb the impact by breaking or cracking the glass. When the glass on the side opposite to the side subject to the impact is set to be easy to damage or crack to a certain extent, the glass is particularly susceptible to absorbing the impact. Therefore, it is possible to make the impact easily absorbed by reducing or eliminating the region of excessively high strength by performing the strength leveling processing on the side opposite to the side subject to the impact. Accordingly, from the viewpoint of reducing or eliminating the damage to the pedestrian when the pedestrian collides with the laminated glass for vehicle from the exterior of the laminated glass for vehicle, the strength leveling processing is preferably applied to one or more of the second surface 12 and the fourth surface 22, and more preferably applied to at least the second surface 12 on which an influence of the impact is greater. On the other hand, for the same reason, from the viewpoint of reducing or eliminating the damage to the occupant when the occupant collides with the interior of the laminated glass for vehicle, the strength leveling processing is preferably applied to one or more of the third surface 21 and the first surface 11, and more preferably applied to at least the third surface 21 on which an influence of the impact is greater.

### EXAMPLE

In this example, a strength test was performed for a glass plate subjected to the strength leveling processing and an unprocessed glass plate, and both glass plates were compared.

### [Experiment 1]

### (Example 1)

Eight sheets of glass plates having a size of 66 mm × 66 mm and a thickness of 2 mm produced under the same condition were prepared, and each glass plate was subjected to the strength leveling processing. A cotton cloth was spread out, and about 10 g of the eight kinds of powder (Kanto loam) described in JIS Z8901 " Test powders and test particles" was spread to a region with an area of about 200 cm² so that the thickness was uniform. 100 mL of water was sprinkled evenly over the region where the powder was placed. Subsequently, the surface of the cloth on which the powder was placed was mounted on the surface of the glass plate, and the cloth was reciprocated at a stroke of 6 cm for about 2 seconds while bringing into contact with the cloth to the surface of the glass plate and applying a pressing force of about 3 kg, and the cloth was rubbed back and forth three times. The strength test was performed for the glass plate after the strength leveling processing.

### (Examples 2)

Eight sheets of unprocessed glass plates similar to the glass plates prepared in Example 1 were prepared, and the strength test was performed.

### <Strength Test>

The strengths of the glass plates in Examples 1 and 2 were measured as the breaking stress (MPa), as follows. The breaking stress was measured by R30 in accordance with ISO 1288-5 (2016). More specifically, a support ring having a diameter of 60 mm and a load ring having a diameter of 12 mm were used to measure the breaking load at a load rate of 0.3 mm per minute by applying a load from a side of the surface where the leveling processing was not performed, i.e., from the unprocessed surface, by the load ring. The breaking stress was determined using the formula described in ISO 1288-5 (2016).

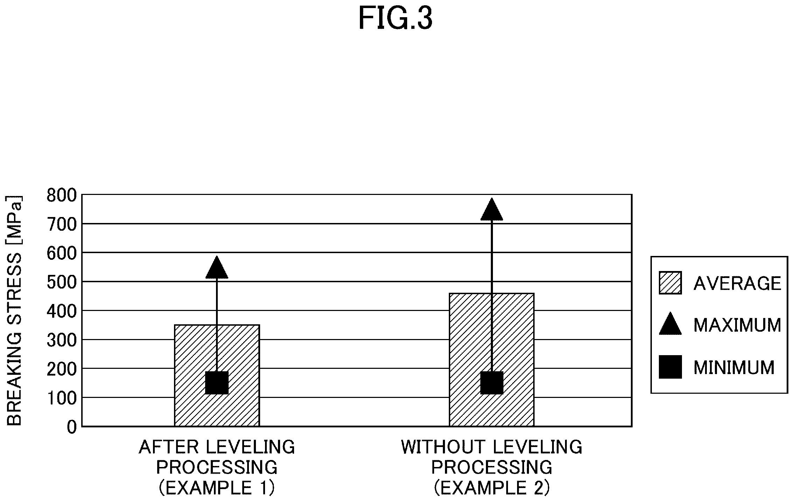

FIG. 3 shows results of the measurement. As shown in FIG. 3, the average value of the breaking stress, which was 455 MPa when the leveling processing was not performed (Example 2), decreased to 352 MPa after the leveling processing (Example 1). In addition, the maximum breaking stress significantly decreased from 752 MPa in the absence of the leveling processing (Example 2) to 552 MPa after the leveling processing (Example 1). Therefore, regions with excessively high breaking stress (strength) were found to be eliminated. On the other hand, the minimum breaking stress was 148 MPa in the absence of the leveling processing (Example 2) and 156 MPa after the leveling processing (Example 1), indicating that the change was extremely small. Therefore, the strength distribution in the plane was found to be suppressed by the strength leveling processing.

### [Experiment 2]

### (Examples 3)

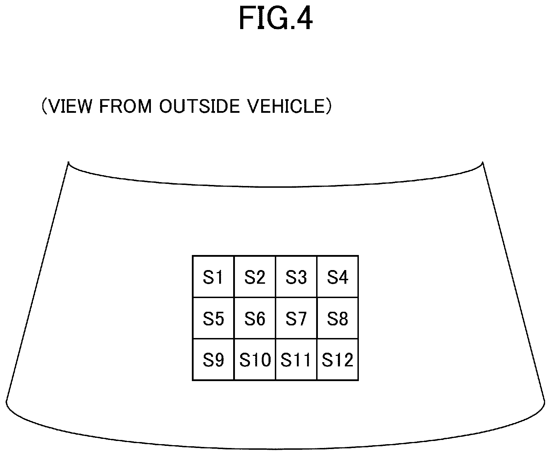

A set of the outer plate (reference numeral 10 in FIG. 2) and the inner plate (reference numeral 20 in FIG. 2) of glass plates with a thickness of 2 mm, which were molded in the same process as the mass-produced windshield, was prepared. Then, for the third surface (the surface indicated by the reference numeral 21 of the inner plate 20 in FIG. 2), a leveling processing similar to the leveling processing performed in Experiment 1 was performed using the eight kinds of powder and cotton cloth. After the process, the glass plates were washed, and returned to the mass production process, and the outer plate and the inner plate were processed into a laminated glass, to prepare a windshield. The obtained windshield had a configuration in which a glass plate with a thickness of 2 mm, an interlayer made of PVB with a thickness of 0.76 mm, and a glass plate with a thickness of 2 mm were laminated. Twelve sheets of samples each having a size of 100 mm × 100 mm (Nos. S1 to S12) were cut from the central part of the windshield as shown in FIG. 4 (a view of the prepared windshield viewed from outside the vehicle).

### (Example 4)

The windshield was prepared in the same manner as Example 3 except that the leveling processing was not performed, and twelve sheets of samples each having a size of 100 mm × 100 mm were cut from the central part of the windshield as shown in FIG. 4.

### <Strength Test>

Measurements were made by R30 according to ISO 1288-5 (2016) in the same manner as for Experiment 1 except that the sample size was 100 mm × 100 mm and the load rate was 1 mm per minute. More specifically, a load was applied from the side of the inner plate (surface indicated by the reference numeral 22 of the inner plate 20 in FIG. 2) using a support ring having a diameter of 60 mm and a load ring having a diameter of 12 mm, and the breaking load was measured. To calculate the breaking stress, a strain gauge (KFGS-5-120-D17-11, Kyowa Electronic Instruments Co., Ltd.) was used to obtain the relationship between the load and the stress, and the breaking stress was calculated.

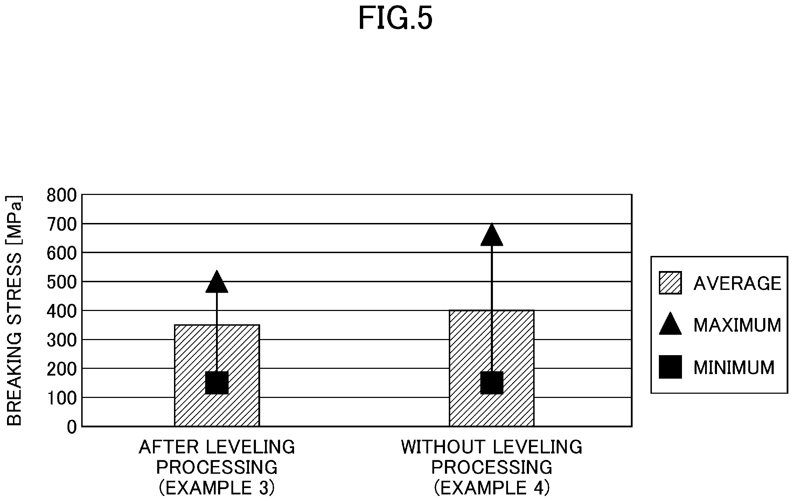

The results are shown in FIG. 5. As shown in FIG. 5, the average value of the breaking stress of 397 MPa in the absence of the leveling processing (Example 4) decreased to 350 MPa after the leveling processing (Example 3). In addition, the maximum breaking stress significantly decreased from 684 MPa in the absence of the leveling processing (Example 4) to 499 MPa after the leveling processing (Example 3). Therefore, regions with excessively high breaking stress (strength) were found to be eliminated. On the other hand, the minimum breaking stress was 147 MPa in the absence of the leveling processing (Example 4) and 160 MPa after the leveling processing (Example 3), indicating that the change was extremely small. Therefore, the strength distribution in the plane was found to be suppressed by the strength leveling processing. The results do not include results of samples with the strain gauge.

The present application claims priority under Japanese Patent Application No. 2020-015447, filed January 31, 2020, the entire contents of which are hereby incorporated by reference.

### Description of Symbols

- 1: Laminated glass
- 10: First glass plate
- 11: First surface
- 12: Second surface
- 20: Second glass plate
- 21: Third surface
- 22: Fourth surface
- 30: Interlayer
- 100: Automobile

## Claims

1. Laminated glass for vehicle comprising a region with a breaking stress measured by a method described in ISO 1288-5 (2016) of 100 MPa or more and 600 MPa or less, wherein
a percentage of the region is greater than or equal to 90% of a see-through region.

2. The laminated glass for vehicle according to claim 1, wherein
a percentage of a region with the breaking stress measured by the method described in ISO 1288-5 (2016) of greater than 600 MPa is less than or equal to 5% of the see-through region.

3. The laminated glass for vehicle according to claim 1 or 2, wherein
a percentage of a region with the breaking stress measured by the method described in ISO 1288-5 (2016) of less than 100 MPa is less than or equal to 5% of the see-through region.

4. The laminated glass for vehicle according to any one of claims 1 to 3, wherein
the breaking stress is a value measured by applying a load from an interior side of the vehicle.

5. The laminated glass for vehicle according to claim 4, wherein
the breaking stress is a value measured by applying a load from an exterior side of the vehicle.

6. The laminated glass for vehicle according to any one of claims 1 to 5, wherein
the breaking stress is a value measured in a state before mounting the laminated glass for vehicle to the vehicle.

7. The laminated glass for vehicle according to any one of claims 1 to 6, wherein
the laminated glass for vehicle is a windshield.

8. An automobile comprising the laminated glass for vehicle according to any one of claims 1 to 7.

9. A method for producing laminated glass for vehicle,
in the laminated glass for vehicle, a first glass plate disposed on an exterior side of the vehicle and a second glass plate disposed on an interior side of the vehicle being laminated through an interlayer,
the first glass plate including a first surface on the exterior side and a second surface on the interior side, and
the second glass plate including a third surface on the exterior side and a fourth surface on the interior side,
wherein the method comprises applying a strength leveling processing to at least one of the first surface and the fourth surface.

10. The method for producing laminated glass for vehicle according to claim 9 further comprising:
applying the strength leveling processing to at least one of the second surface, the third surface, and the fourth surface.

11. The method for producing laminated glass for vehicle according to claim 9 or 10, wherein
the strength leveling processing is performed using powder.

12. The method for producing laminated glass for vehicle according to claim 9 or 10, wherein
the strength leveling processing is performed by bringing into contact with a tool having fine irregularities on a surface.

13. The method for producing laminated glass for vehicle according to claim 11 or 12, wherein
the strength leveling processing is performed in a presence of a liquid.
